# EUROPEAN PATENT SPECIFICATION

(11) **EP 3 544 177 B1**
(45) Date of publication and mention of the grant of the patent: **24.06.2020**
(21) Application number: 18215975.6
(22) Date of filing: 31.12.2018
(51) Int. Cl.: H02S 50/00

(54) **USE OF ELECTRICAL POWER PRODUCED BY A HOUSEHOLD PHOTOVOLTAIC SYSTEM TO ELECTRICALLY POWER REMOTELY ELECTRONICALLY-CONTROLLABLE ELECTRIC HOUSEHOLD APPLIANCES**
VERWENDUNG VON ELEKTRISCHER LEISTUNG, DIE VON EINEM PHOTOVOLTAIKSYSTEM AUS HAUSHALTSTEIL HERGESTELLT WIRD, UM ELEKTRISCH KRAFTWERKLICH ELEKTRONISCH STEUERBARE ELEKTRISCHE HAUSHALTSGERÄTE
UTILISATION DE L'ÉNERGIE ÉLECTRIQUE PRODUIT PAR UN SYSTÈME PHOTOVOLTAÏQUE DOMESTIQUE POUR ALIMENTER ÉLECTRIQUEMENT DES APPAREILS ÉLECTRIQUES COMMANDÉS À DISTANCE

(30) Priority: 22.03.2018 IT 201800003898
(43) Date of publication of application: 25.09.2019
(73) Proprietor: Albasolar S.r.l., 12051 Alba (IT)
(72) Inventor: MARENGO, Massimo, 12051 ALBA (CN) (IT)
(74) Representative: Bergadano, Mirko

(56) References cited:
- CN-A- 103 105 528
- US-A1- 2016 164 299

## Description

### Priority Claim

This European patent application claims the priority of Italian patent application No. 102018000003898 filed on March, 22, 2018.

### Technical Field of the Invention

The present invention relates to the exploitation of the electrical power produced by a household photovoltaic system to electrically power remotely electronically-controllable electric household appliances.

### State of the Art

US 2016/164299 A1 discloses an apparatus for the conversion and optimized management of power produced from renewable sources, and in particular from solar sources, in the household environment and not only, adapted to control the use of power in order to maximize the management cost-effectiveness whilst ensuring the optimization of the energy collection by the photovoltaic generator..

### Object and Summary of the Invention

The object of the present invention is to provide logics that allow to maximize the exploitation of the electrical power produced by the household photovoltaic systems to electrically power remotely electronically-controllable electric household appliances.

This object is achieved by the present invention, which relates to an electronic control system to control exploitation of electrical power produced by a household photovoltaic system to electrically power remotely electronically-controllable electric household appliances.

### Brief Description of the Drawings

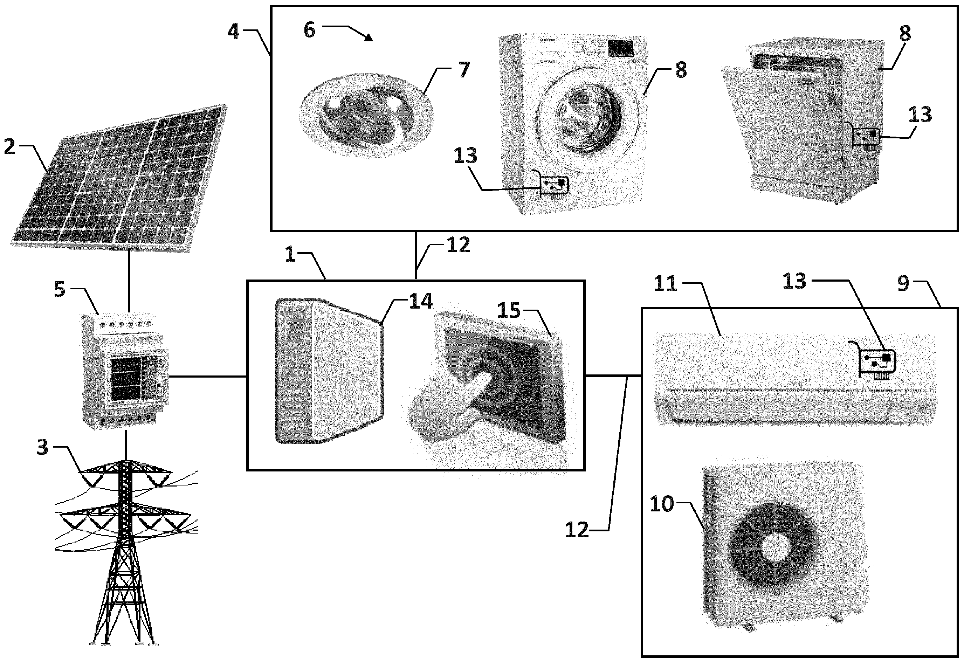

The attached Figure shows a block diagram of an electronic control system to control exploitation of electrical power produced by a household photovoltaic system according to an embodiment of the present invention.

### Detailed Description of a Preferred Embodiment of the Invention

The following description is provided to allow a person skilled in the art to implement and use the invention. Various modifications to the disclosed embodiments will be immediately apparent to a person skilled in the art and the generic principles disclosed herein may be applied to other embodiments and applications without, thereby, departing from the scope of the present invention as claimed in the appended claims. Therefore, the present invention must not be considered as limited to the embodiments disclosed and shown, but must be granted the widest scope consistent with the principles and features disclosed herein and claimed in the appended claims.

The attached figure shows a block diagram of an electronic control system **1** to control exploitation of electrical power produced by a household photovoltaic system **2.**

The household photovoltaic system **2** is electrically connected to a public electrical power mains **3** and to a household electric system **4** through an electronic electrical power meter **5** configured to measure the electrical power produced by the household photovoltaic system **2** and the electrical power absorbed from or supplied to the public electrical power mains **3** as a result of an electrical power underproduction or overproduction of the household photovoltaic system **2** compared to the electrical power consumption of the household electric system **4.**

The household electric system **4** comprises a plurality of household electric loads **6** comprising, *inter alia,* internal and external light sources **7,** electric household appliances **8,** an electrically powered hot/cold air/air heat pump system **9** comprising one or more outdoor units **10** and one or more indoor units **11,** also known as splits, etc.

The electric household appliances **8** and the indoor units **11** of the hot/cold air/air heat pump system **9** are remotely electronically controllable via a household signal communication system **12** which, according to the specific environmental and operating conditions in which it is installed, can be completely wired, completely wireless or a combination of the two.

In one embodiment, the household signal communication system **12** could, for example, be a powerline communication system.

In a different embodiment, to which the following description will refer without thereby losing generality, the household signal communication system **12** is a household computer communication network which, according to the specific environmental and operational conditions in which it is installed, can be a based on a TCP/IP communication protocol or on a communication protocol other than TCP/IP, for example the Modbus protocol.

In the case where the household computer communication network is based on a TCP/IP communication protocol, it can be a wired Local Area Network (LAN), a Wireless Local Area Network (WLAN) or a mixed LAN/WLAN network. Therefore, the electric household appliances **8** and the indoor units **11** of the hot/cold air/air heat pump system **9** can be remotely electronically controlled by means of fully wired connections, in particular by means of fieldbus, fully wireless connections, in particular radio, or mixed connections partly wired and partly wireless.

Furthermore, the electric household appliances **8** and of the indoor units **11** of the hot/cold air/air heat pump system **9** can be remotely electronically controlled via a direct communication, namely entirely internal to the household environment in which the household computer communication network **12** is installed, or via an indirect communication, namely a communication that is partly external to the household environment in which the household computer communication network **12** is installed, e.g., through cloud services provided by the manufacturers of electric household appliances **8** and of the indoor units **11** of the hot/cold air/air heat pump system **9.**

If the electric household appliances **8** and the indoor units **11** of the hot/cold air/air heat pump system **9** fail to expose connection capabilities to establish a connection to the household computer communication network **12,** the electric household appliances **8** and the indoor units **11** of the hot/cold air/air heat pump **9** can be provided with appropriate boards or network interfaces **13** configured to allow the electric household appliances **8** and the indoor units **11** of the hot/cold air/air heat pump system **9** to communicate with the household computer communication network **12.**

In a preferred embodiment, the electric household appliances **8** and the indoor units **11** of the hot/cold air/air heat pump system **9** are Wi-Fi-enabled, namely they expose Wi-Fi connectivity, and, consequently, the household computer communication network **12** is a WLAN or mixed LAN/WLAN network. Electric household appliances **8** and the indoor units **11** of new generation hot/cold air/air heat pump systems **9** natively expose Wi-Fi connectivity, so they can be used without requiring any intervention whatsoever, while electric household appliances **8** and indoor units **11** of the hot/cold air/air heat pump system **9** which do not natively expose Wi-Fi connectivity, they need to be provided with appropriate Wi-Fi interfaces.

The electronic control system **1** comprises an electronic control unit **14,** conveniently in the form of a Programmable Logic (micro-)Controller (PLC), and provided with a user programming interface **15** comprising a display and a keypad or a touch-sensitive display.

The electronic control unit **14** is configured to communicate with the electronic electrical power meter **5,** the electric household appliances **8,** and the indoor units **11** of the hot/cold air/air heat pump system **9** via the household computer communication network **12.** A proprietary management software is installed on the electronic control unit **14** to manage operation of the electric household appliances **8** and of the internal units **11** of the hot/cold air/air heat pump system **9** and designed to optimize, when executed, the exploitation of the electrical power produced by the household photovoltaic system **2** to electrically power the electric household appliances **8** and the indoor units **11** of the hot/cold air/air heat pump system **9.**

In addition to being electrically powered by the electrical power produced by the household photovoltaic system **2** or absorbed from the public electrical power mains **3,** the electric household appliances **8** and the indoor units **11** of the hot/cold air/air heat pump system **9** are also in communication with the electronic control unit **14** via the household computer communication network **12,** so that operation thereof can be electronically controlled by the electronic control unit **14** by sending operation enabling commands generated according to the proprietary logics described in detail in the following, and, in response to the receipt thereof, the electric household appliances **8** and the internal units **11** of the hot/cold air/air heat pump system **9** can perform respective operating cycles (washing laundry for washing machines, washing dishes for dishwashers, etc.) according to the specifics operating programs selected by the users, for example the specific washing programs selected for washing machines and dishwashers, the specific drying programs selected for the dryers, the specific cooking programs selected for electric ovens, etc.

The management software installed in the electronic control unit **14** is designed to display on a display of the user programming interface **15,** when executed, a Graphical User Interface (GUI) via which users can interact with the electric household appliances **8** and the indoor units **11** of the hot/cold air/air heat pump system **9** to manually control operation and to program automatic operation thereof, as described in greater detail in the following.

In particular, the management software is designed to implement a proprietary management strategy to manage exploitation of electrical power produced by the household photovoltaic system **2** to electrically power the electric household appliances **8** and the indoor units **11** of the hot/cold air/air heat pump system **9.**

The management strategy is particularly adapted for household environments where the occupants are usually away from home for all or part of the day and, therefore, the electric household appliances **8** may not be operated when an excess of electrical power produced by the household photovoltaic system **2** over the electrical power consumption of the household electric loads **6** of the household electric system **4** is available.

The management strategy is the result of a dual-sided observation that the household photovoltaic system **2** has an average electrical power production curve that increases from the morning to a maximum between 12 am and 1 pm, then decreases up to zero at sunset, and that the excess of electrical power produced by the household photovoltaic system **2** over the electrical power consumption of the household electric loads **6** of the household electric system **4** is supplied to the public electrical power mains **3** at a price which is currently very low and is currently about four to six times lower than the gross purchase price paid by users to the electricity companies that produce or sell electrical power.

With regard to the exploitation of the electrical power produced by the household photovoltaic system **2** to electrically power the indoor unit **11** of the hot/cold air/air heat pump system **9,** the management software is designed to implement the management strategy disclosed in the Italian patent application No. 102016000127654 filed by the Applicant on December 16, 2017.

Instead, as regards the exploitation of the electrical power produced by the household photovoltaic system **2** to electrically power the electric household appliances **8,** the management software is designed to implement the management strategy described in the following.

In particular, the management software is designed to store a plurality of available user-selectable operating modes of the electric household appliances **8** and described in detail in the following, and to expose a Graphical User Interface (GUI) via which users can:
- input a list of electric household appliances **8** connected to the household electric system **4** to be remotely controlled and to specify the main electrical and operating characteristics of the electric household appliances **8,** in particular their electrical power consumption, the (maximum) durations of their operating cycles, for example of those most frequently used, etc., and
- program operation of each of the electric household appliances **8** in the list by making selections according to a prioritized order and in particular:
   - program operation priorities of the electric household appliances **8,** so as to define a timeline of operation of the electric household appliances **8,** for example first the washing machine(s), then the dryer(s), the dishwasher(s), the electric oven(s), etc.,
   - program a general operating mode for each of the electric household appliances **8** and selectable from:
      - a general manual operating mode, in which electric household appliances **8** are operated by the user, and
      - a general automatic operating mode, in which the electric household appliances **8** are operated by the electronic control unit **14,**
   - if an automatic general operating mode is programmed, program an automatic specific operating mode for each of the electric household appliances **8** and selectable from:
      - one or different "Programmable" automatic operating modes aimed at prioritizing the completion of the operating cycles of the electric household appliances **8** within programmable completion times with respect to the electric power saving for the execution of the operating cycles of the electric household appliances **8,** and
      - one or different "Power Saving" automatic operating modes aimed at prioritizing the electric power saving for the execution of the operating cycles of the electric household appliances **8,** without putting any time constraints on the completion of the operating cycles, and
- for the "Programmable" automatic operating modes, program the completion times of the operating cycles of the electric household appliances **8.**

As a non-limiting example, the "Programmable" automatic operating modes may comprise:
- a "Lunch" automatic operating mode designed to cause the operating cycles of the electric household appliances **8** to be completed within a programmable lunch time,
- "Dinner" automatic operating mode designed to cause the operating cycles of the electric household appliances **8** to be completed within a programmable dinner time, and
- a "Programmable" automatic operating mode designed to cause the operating cycles of the electric household appliances **8** to be completed within any programmable times, different from that of the meals as they are already covered by the two previous automatic operating modes.

In particular, the "Power Saving" automatic operating modes are designed to cause, when implemented, the electric household appliances **8,** for which these automatic operating modes have been programmed, to start their respective operating cycles only when the excess of electrical power produced by the household photovoltaic system **2** over the electrical power consumption of the household electric loads **6** of the household electric system **4** is enough to allow the electric household appliances **8** to start the respective operating cycles, which, if not interruptible, are in any case completed even if it is necessary to absorb electrical power from the public electrical power mains **3** due to a reduction in the energy production of the household photovoltaic system **2** after the operating cycles have started. In the event that the operating cycles of the electric household appliances **8** are interruptible, users can be put in a position to program whether the operating cycles are to be interrupted or completed in the event that it is necessary to absorb electrical power from the public electrical power mains **3.**

The "Programmable" automatic operating modes, on the contrary, are designed to cause, when implemented, the electric household appliances **8** for which these automatic operating modes have been programmed, to complete the respective operating cycles within the scheduled completion times, preferably, but not necessarily, by exploiting the excess of electrical power produced by the household photovoltaic system **2** over the electrical power consumption of the household electric system **4,** to the point that, should the electrical power production of the household photovoltaic system **2** never become enough to allow electric household appliances **8** to carry out their respective operating cycles by exploiting only the excess of electrical power produced by the household photovoltaic system **2** over the electrical power consumption of the household electric system **4,** the electric household appliances **8** are operated, at a certain point, so as to cause the respective operating cycles to be completed within the scheduled completion times by absorbing the required electrical power from the public electrical power mains **3.**

Moreover, in the "Programmable" and "Power Saving" automatic operating modes, should the excess of electrical power produced by the household photovoltaic system **2** over the electrical power consumption of the household electric system **4** decrease during the execution of the operating cycles of the electric household appliances **8** to such an extent as to become insufficient to allow the operating cycles to be completed, these are in any case brought to completion by absorbing the required electrical power from the public electrical power mains **3.**

Moreover, in the "Programmable" automatic operating modes, should the excess of electrical power produced by the household photovoltaic system **2** over the electrical power consumption of the electric utility systems **6** of the household electric system **4** never become enough to allow the operating cycles of the electric household appliances **8** to be completed within the scheduled completion times by exploiting only the excess of electrical power, the electric household appliances **8** are operated in advance to the respective scheduled activation times of time advances equal to the (maximum) durations of the respective operating cycles, so as to cause the respective operating cycles to be completed within the scheduled completion times.

The management software is therefore designed to:
- store the selections of the operating modes and the time schedules made by the users,
- implement an electrical power analyser to constantly determine the amount of electrical power produced by the household photovoltaic system **2** and the electrical power consumption of the household electric system **4** and, based thereon, the excess of electrical power produced by the household photovoltaic system **2** over the electrical power consumption of the household electric loads **6** of the household electric system **4,** and which, for this reason, would be supplied to the public electrical power mains **3** at very low cost,
- identify the electric household appliances **8** for which automatic operating modes have been programmed, and
- enable operation of those electric household appliances **8** for which automatic operating modes have been programmed based on the programmed operating priorities and on the corresponding programmed automatic operating modes.

As previously mentioned, enabling the operation of the electric household appliances **8** comprises the transmission to the electric household appliances **8,** via the household computer communication network **12** and the respective network interfaces **13,** of operation enabling commands, which will responsively cause the electric household appliances **8** to operate according to the specific operating programs selected for the individual electric household appliances **8.**

In this way, those electric household appliances **8** for which the "Programmable" automatic operating modes have been programmed will carry out their respective operating cycles within the scheduled completion times, regardless of whether there is an excess of electrical power produced by the household photovoltaic system **2** over the electrical power consumption of the household electric loads **6** of the household electric system **4** and the excess of electrical power is enough to allow the electric household appliances **8** to complete the respective operating cycles, while those electric household appliances **8,** for which the "Power Saving" automatic operating modes have been programmed will start the respective operating cycles only when the excess of electrical power produced by the household photovoltaic system **2** over the electrical power consumption of the household electric loads **6** of the household electric system **4** is enough to allow the electric household appliances **8** to start the respective operating cycles.

Therefore, if, as usually happens on a sunny day, the excess of electrical power produced by the household photovoltaic system **2** over the electrical power consumption of the household electric loads **6** of the household electric system **4** increases during the day, then the management software causes the excess of electrical power, instead of being supplied to the public electrical power mains **3** at very low costs, to be used by the electric household appliances **8** to carry out the respective operating cycles according to the programmed automatic operating modes.

In any case, should the excess of electrical power produced by the photovoltaic system **2** over the electrical power consumption of the household electric loads **6** of the household electric system **4** not only fail to grow but even decrease during the day, due to, for example, a progressive cloud overcast or the approaching sunset, down to zero or even becoming negative, the management software controls operation of the electric household appliances **8** in order to maximize the exploitation of the electrical power produced by the household photovoltaic system **2** to electrical power the electric household appliances **8,** thereby minimizing the absorption of electrical power from the public electrical power mains **3.**

Finally, it is possible to provide a web version that allows the control electronic control unit **14** to be remotely accessed by means of a user terminal, such as a smartphone, a tablet or a personal computer, and via an Internet connection, in order to display the same information and carry out the same settings and programming as those that can be displayed and carried out via the graphical user interface displayed on the user interface **15** of the electronic control unit **14.** In particular, the web version is particularly advantageous when, in case of needing to return home ahead of schedule, it is necessary to change the programmed automatic operating mode or the programmed times in the "Programmable" operating modes.

## Claims

1. An electronic control system **(1)** to control exploitation of electrical power produced by a household photovoltaic system **(2)** to electrically power supply remotely electronically-controllable household appliances **(8);**
the household photovoltaic system **(2)** is electrically connected to a public electrical power mains **(3)** and to a household electric system **(4)** through an electronic electrical power meter **(5)** configured to measure the electrical power produced by the household photovoltaic system **(2)** and the electrical power absorbed from or supplied to the public electrical power mains (3) as a result of an electric power underproduction or overproduction by the household photovoltaic system **(2)** compared to the electrical power consumption of the household electric system **(4);**
the electronic control system **(1)** comprises an electronic control unit **(14)** provided with a programming user interface **(15)** and configured to communicate with the electronic electrical power meter **(5)** to determine an excess of electrical power produced by the photovoltaic system **(2)** over the electrical power consumption of the household electric system **(4),** and with the electric household appliances **(8)** to remotely control operation thereof based on the excess of electrical power produced by the photovoltaic system **(2)** over the electric power consumption of the household electric system **(4),** on programmed operation priorities, and on programmed automatic operating modes;
the electronic control unit **(14)** is further configured to store a plurality of user-selectable operating modes of the electric household appliances **(8)** and to allow the following programming of the operation of the electronic control unit **(14)** to be performed via the programming user interface **(15):**
- inputting a list of electric household appliances **(8)** to be remotely controlled, and information indicative of the electrical and operating characteristics of the electric household appliances **(8)** comprising electric power consumption and durations of the operating cycles;
- programming operation priorities of the electronic household appliance **(8)** to define a timeline of operation of electric household appliances **(8),**
- programming a specific automatic operating mode for each of the electric household appliances **(8)** and selectable from:
- one or different first automatic operating modes aimed at prioritizing completion of the operating cycles of the electric household appliances **(8)** within programmable completion times with respect to the exploitation of electrical power produced by the household photovoltaic system **(2)** for the execution of the operating cycles of the electric household appliances **(8),** and
- one or different second automatic operating modes aimed at prioritizing exploitation of the electrical power produced by the household photovoltaic system **(2)** for the execution of the operating cycles of the electric household appliances **(8)** with respect to the completion of the operating cycles of the electric household appliances **(8)** within programmable completion times.

2. The electronic control system (1) of claim 1, wherein the first automatic operating modes comprise:
- an automatic operating mode designed to cause the operating cycles of the electric household appliances **(8)** to be completed within a programmable lunch time,
- an automatic operating mode designed to cause the operating cycles of the electric household appliances **(8)** to be completed within a programmable dinner time, and
- an automatic operating mode designed to cause the operating cycles of the electric household appliances **(8)** to be completed within a programmable time.

3. The electronic control system **(1)** of claim 1 or 2, wherein the programming user interface **(15)** is further designed to allow a general operating mode to be programmed for each of the electric household appliances **(8)** and selectable from:
- a general manual operating mode, in which the electric household appliances **(8)** are operated by a user, and
- an automatic general operating mode, in which the electric household appliances (8) are operated by the electronic control unit **(14).**

4. The electronic control system **(1)** of any one of the preceding claims, wherein the second automatic operating modes are designed to cause, when implemented, the electric household appliances **(8)** for which these automatic operating modes have been programmed, to start the respective operating cycles only when an excess of electrical power produced by the household photovoltaic system **(2)** over the electric power consumption of the household electric system **(4)** is enough to allow the electric household appliances **(8)** to start their respective operating cycles.

5. The electronic control system **(1)** of any one of the preceding claims, wherein the first automatic operating modes are designed to cause, when implemented, the electric household appliances **(8)** for which these automatic operating modes have been programmed to complete the respective operating cycles within the programmed times, preferably, but not necessarily, by exploiting the excess of electrical power produced by the household photovoltaic system (2) over the electric power consumption of the household electric system **(4),** to the point that, should the electrical power produced by the household photovoltaic system **(2)** be not enough to allow the electric household appliances **(8)** to carry out the respective operating cycles using only the excess of electrical power, the electric household appliances **(8)** are still operated so as to complete the respective operating cycles within the programmed times even absorbing the required electrical power from the public electrical power mains **(3).**

6. The electronic control system **(1)** according to claim 5, wherein the first and second automatic operating modes are further designed to cause, should the excess of electrical power produced by the household photovoltaic system **(2)** over the electric power consumption of the household electric system **(4)** reduce during the execution of the operating cycles of the electric household appliances **(8)** to such an extent as to become insufficient to allow the operating cycles to be completed, the operating cycles to be completed by absorbing the required electrical power from the public electrical power mains **(3).**

7. The electronic control system **(1)** of any one of the preceding claims, wherein the electric household appliances **(8)** expose Wi-Fi connectivity to communicate with the electronic control unit **(14)** via a wireless local area network **(12).**

8. A software loadable in the electronic control unit **(14)** of the electronic control system **(1)** of any one of the preceding claims, and designed to cause, when executed, the electronic control unit **(14)** to become programmed as claimed in any one of the preceding claims.

## Patentansprüche

1. Elektronisches Steuersystem (1) zur Steuerung der Nutzung von elektrischer Energie, die von einem Haushaltsphotovoltaiksystem (2) erzeugt wird, um elektronisch fernsteuerbare Haushaltsgeräte (8) mit elektrischer Energie zu versorgen;
wobei das Haushaltsphotovoltaiksystem (2) elektrisch mit einem öffentlichen Stromnetz (3) und mit einem elektrischen Haushaltssystem (4) über einen elektronischen Stromzähler (5) verbunden ist, der ausgebildet ist, die von dem Haushaltsphotovoltaiksystem (2) erzeugte elektrische Energie und die von dem öffentlichen Stromnetz (3) aufgenommene oder an das öffentliche Stromnetz (3) gelieferte elektrische Energie als Ergebnis einer Unterproduktion oder Überproduktion von elektrischer Energie durch das Haushaltsphotovoltaiksystem (2) im Vergleich zum elektrischen Energieverbrauch des elektrischen Haushaltssystems (4) zu messen;
wobei das elektronische Steuersystem (1) eine elektronische Steuereinheit (14) umfasst, die mit einer Programmierungs-Benutzerschnittstelle (15) versehen und ausgebildet ist, mit dem elektronischen Stromzähler (5), um einen Überschuss an elektrischer Energie, die durch das Photovoltaiksystem (2) erzeugt wird, gegenüber dem elektrischen Energieverbrauch des elektrischen Haushaltssystems (4) zu bestimmen, und mit den elektrischen Haushaltsgeräten (8) zu kommunizieren, um deren Betrieb fernzusteuern basierend auf dem Überschuss an elektrischer Energie, die durch das Photovoltaiksystem (2) erzeugt wird gegenüber dem elektrischen Energieverbrauch des elektrischen Haushaltssystems (4), auf programmierten Betriebsprioritäten und auf programmierten automatischen Betriebsarten;
wobei die elektronische Steuereinheit (14) ferner ausgebildet ist, eine Vielzahl von von dem Benutzer auswählbaren Betriebsarten der elektrischen Haushaltsgeräte (8) zu speichern und die folgende Programmierung des Betriebs der elektronischen Steuereinheit (14) über die Programmierungs-Benutzerschnittstelle (15) zu ermöglichen:
- Eingeben einer Liste von elektrischen Haushaltsgeräten (8), die ferngesteuert werden sollen, und von Informationen, die die elektrischen und Betriebseigenschaften der elektrischen Haushaltsgeräte (8) anzeigen, umfassend den elektrischen Stromverbrauch und die Dauer der Betriebszyklen;
- Programmieren von Betriebsprioritäten des elektronischen Haushaltsgeräts, um eine Zeitachse des Betriebs elektrischer Haushaltsgeräte (8) zu definieren,
- Programmieren einer spezifischen automatischen Betriebsart für jedes der elektrischen Haushaltsgeräte (8) und auswählbar aus:
- einer oder verschiedenen ersten automatischen Betriebsarten, die darauf abzielen, die Vollendung der Betriebszyklen der elektrischen Haushaltsgeräte (8) innerhalb programmierbarer Vollendungszeiten in Bezug auf die Nutzung der von dem Haushaltsphotovoltaiksystem (2) erzeugten elektrischen Energie für die Ausführung der Betriebszyklen der elektrischen Haushaltsgeräte (8) zu priorisieren, und
- einer oder verschiedenen zweiten automatischen Betriebsarten, die darauf abzielen, die Nutzung der von dem Haushaltsphotovoltaiksystem (2) erzeugten elektrischen Energie für die Ausführung der Betriebszyklen der elektrischen Haushaltsgeräte (8) in Bezug auf die Vollendung der Betriebszyklen der elektrischen Haushaltsgeräte (8) innerhalb programmierbarer Vollendungszeiten zu priorisieren.

2. Elektronisches Steuersystem (1) nach Anspruch 1, wobei die ersten automatischen Betriebsarten folgendes umfassen:
- eine automatische Betriebsart, die ausgelegt ist, die Betriebszyklen der elektrischen Haushaltsgeräte (8) zu veranlassen, innerhalb einer programmierbaren Mittagessenszeit abgeschlossen zu werden,
- eine automatische Betriebsart, die ausgelegt ist, die Betriebszyklen der elektrischen Haushaltsgeräte (8) zu veranlassen, innerhalb einer programmierbaren Abendessenszeit abgeschlossen zu werden, und
- eine automatische Betriebsart, die ausgelegt ist, die Betriebszyklen der elektrischen Haushaltsgeräte (8) zu veranlassen, innerhalb einer programmierbaren Zeit abgeschlossen zu werden.

3. Elektronisches Steuersystem (1) nach Anspruch 1 oder 2, wobei die Programmierungs-Benutzerschnittstelle (15) ferner ausgelegt ist, einer allgemeinen Betriebsart zu ermöglichen, für jedes der elektrischen Haushaltsgeräte (8) programmiert zu werden und auswählbar zu sein aus:
- einer allgemeinen manuellen Betriebsart, in welcher die elektrischen Haushaltsgeräte (8) von einem Benutzer bedient werden, und
- einer automatischen allgemeinen Betriebsart, in welcher die elektrischen Haushaltsgeräte (8) durch die elektronische Steuereinheit (14) betrieben werden.

4. Elektronisches Steuersystem (1) nach einem der vorhergehenden Ansprüche, wobei die zweiten automatischen Betriebsarten ausgelegt sind, wenn implementiert, die elektrischen Haushaltsgeräte (8), für die diese automatischen Betriebsarten programmiert wurden, zu veranlassen, die jeweiligen Betriebszyklen nur dann zu starten, wenn ein Überschuss an elektrischer Energie, die durch das Haushaltsphotovoltaiksystem (2) erzeugt wird, gegenüber dem elektrischen Energieverbrauch des elektrischen Haushaltssystems (4) ausreicht, um den elektrischen Haushaltsgeräten (8) zu ermöglichen, ihre jeweiligen Betriebszyklen zu starten.

5. Elektronisches Steuersystem (1) nach einem der vorhergehenden Ansprüche, wobei die ersten automatischen Betriebsarten ausgelegt sind, wenn implementiert, die elektrischen Haushaltsgeräte (8), für die diese automatischen Betriebsarten programmiert wurden, zu veranlassen, bei ihrer Ausführung die jeweiligen Betriebszyklen innerhalb der programmierten Zeiten abzuschließen, vorzugsweise, aber nicht notwendigerweise, indem sie den Überschuss an elektrischer Energie, die von dem Haushaltsphotovoltaiksystem (2) erzeugt wird, gegenüber dem elektrischen Energieverbrauch der elektrischen Haushaltsanlage (4) ausnutzen, bis zu dem Punkt, an dem die von dem Haushaltsphotovoltaiksystem (2) erzeugte elektrische Energie nicht ausreicht, damit die elektrischen Haushaltsgeräte (8) die jeweiligen Betriebszyklen nur mit dem Überschuss an elektrischer Energie durchführen können, die elektrischen Haushaltsgeräte (8) weiterhin so betrieben werden, dass sie die jeweiligen Betriebszyklen innerhalb der programmierten Zeiten auch unter Aufnahme der erforderlichen elektrischen Energie aus dem öffentlichen Stromnetz (3) abschließen.

6. Elektronisches Steuersystem (1) nach Anspruch 5, wobei die ersten und die zweiten automatischen Betriebsarten ferner ausgelegt sind, falls der Überschuss an elektrischer Energie, die von dem Haushaltsphotovoltaiksystem (2) erzeugt wird, über den elektrischen Energieverbrauch des elektrischen Haushaltssystems (4) während der Ausführung der Betriebszyklen der elektrischen Haushaltsgeräte (8) in einem solchen Ausmaß abnimmt, dass er nicht mehr ausreicht, um die Betriebszyklen zu vollenden, die Betriebszyklen zu veranlassen, durch Aufnahme der erforderlichen elektrischen Energie aus dem öffentlichen Stromnetz (3) vollendet zu werden.

7. Elektronisches Steuersystem (1) nach einem der vorhergehenden Ansprüche, wobei die elektrischen Haushaltsgeräte (8) eine Wi-Fi-Konnektivität zur Kommunikation mit der elektronischen Steuereinheit (14) über ein drahtloses lokales Netzwerk (12) aufweisen.

8. Software, die in die elektronische Steuereinheit (14) des elektronischen Steuersystems (1) nach einem der vorhergehenden Ansprüche ladbar und ausgelegt ist, bei ihrer Ausführung, die elektronische Steuereinheit (14) zu veranlassen, wie in einem der vorhergehenden Ansprüche beansprucht programmiert zu werden.

## Revendications

1. Système de commande électronique (1) pour commander l'exploitation de la puissance électrique produite par un système photovoltaïque domestique (2) pour alimenter en électricité des appareils électroménagers télécommandés électroniquement (8) ;
le système photovoltaïque domestique (2) est connecté électriquement à un réseau électrique public (3) et à un système électrique domestique (4) au moyen d'un compteur électronique de puissance électrique (5) configuré pour mesurer la puissance électrique produite par le système photovoltaïque domestique (2) et la puissance électrique absorbée par ou fournie au réseau électrique public (3) en tant que résultat d'une sous-production ou d'une surproduction de puissance électrique par le système photovoltaïque domestique (2) comparée à la consommation électrique du système électrique domestique (4) ;
le système de commande électronique (1) comprend une unité de commande électronique (14) munie d'une interface utilisateur de programmation (15) et configurée pour communiquer avec le compteur électronique de puissance électrique (5) afin de déterminer un excédent de puissance électrique produit par le système photovoltaïque (2) par rapport à la consommation électrique du système électrique domestique (4), et avec les appareils électroménagers (8) pour commander à distance leur fonctionnement en fonction de l'excédent de puissance électrique produite par le système photovoltaïque (2) par rapport à la consommation électrique du système électrique domestique (4), de priorités de fonctionnement programmées et de modes de fonctionnement automatiques programmés ;
l'unité de commande électronique (14) est en outre configurée pour mémoriser une pluralité de modes de fonctionnement des appareils électroménagers (8) pouvant être sélectionnés par un utilisateur et pour permettre la programmation suivante du fonctionnement de l'unité de commande électronique (14) à effectuer via l'interface utilisateur de programmation (15) :
- saisie d'une liste d'appareils électroménagers (8) à commander à distance, et d'informations indicatives des caractéristiques électriques et de fonctionnement des appareils électroménagers (8) comprenant une consommation de puissance électrique et des durées des cycles de fonctionnement ;
- programmation de priorités de fonctionnement de l'appareil électroménager (8) pour définir un calendrier de fonctionnement des appareils électroménagers (8),
- programmation d'un mode de fonctionnement automatique spécifique pour chacun des appareils électroménagers (8) et sélectionnable à partir de :
- un ou différents premiers modes de fonctionnement automatique visant à donner la priorité à l'achèvement des cycles de fonctionnement des appareils électroménagers (8) dans des délais d'achèvement programmables par rapport à l'exploitation de la puissance électrique produite par le système photovoltaïque domestique (2) pour l'exécution des cycles de fonctionnement des appareils électroménagers (8), et
- un ou différents deuxièmes modes de fonctionnement automatique visant à donner la priorité à l'exploitation de la puissance électrique produite par le système photovoltaïque domestique (2) pour l'exécution des cycles de fonctionnement des appareils électroménagers (8) par rapport à l'achèvement des cycles de fonctionnement des appareils électroménagers (8) dans des délais d'achèvement programmables.

2. Système de commande électronique (1) selon la revendication 1, dans lequel les premiers modes de fonctionnement automatique comprennent :
- un mode de fonctionnement automatique conçu pour faire en sorte que les cycles de fonctionnement des appareils électroménagers (8) soient terminés à une heure de déjeuner programmable,
- un mode de fonctionnement automatique conçu pour faire en sorte que les cycles de fonctionnement des appareils électroménagers (8) soient terminés à une heure de dîner programmable, et
- un mode de fonctionnement automatique conçu pour faire en sorte que les cycles de fonctionnement des appareils électroménagers (8) soient terminés dans un délai programmable.

3. Système de commande électronique (1) selon la revendication 1 ou 2, dans lequel l'interface utilisateur de programmation (15) est en outre conçue pour permettre la programmation d'un mode de fonctionnement général pour chacun des appareils électroménagers (8) et sélectionnable à partir de :
- un mode de fonctionnement manuel général, dans lequel les appareils électroménagers (8) sont actionnés par un utilisateur, et
- un mode de fonctionnement général automatique, dans lequel les appareils électroménagers (8) sont actionnés par l'unité de commande électronique (14).

4. Système de commande électronique (1) selon l'une quelconque des revendications précédentes, dans lequel les deuxièmes modes de fonctionnement automatique sont conçus pour faire en sorte que, lorsqu'ils sont mis en œuvre, les appareils électroménagers (8) pour lesquels ces modes de fonctionnement automatique ont été programmés, ne démarrent les cycles de fonctionnement respectifs que lorsqu'un excédent de puissance électrique produite par le système photovoltaïque domestique (2) par rapport à la consommation électrique du système électrique domestique (4) est suffisant pour permettre aux appareils électroménagers (8) de démarrer leurs cycles de fonctionnement respectifs.

5. Système de commande électronique (1) selon l'une quelconque des revendications précédentes, dans lequel les premiers modes de fonctionnement automatique sont conçus pour faire en sorte que, lorsqu'ils sont mis en œuvre, les appareils électroménagers (8) pour lesquels ces modes de fonctionnement automatique ont été programmés achèvent les cycles de fonctionnement respectifs dans les délais programmés, de préférence, mais pas nécessairement, en exploitant l'excédent de puissance électrique produite par le système photovoltaïque domestique (2) par rapport à la consommation électrique du système électrique domestique (4), au point que, si la puissance électrique produite par l'installation photovoltaïque domestique (2) n'est pas suffisante pour permettre aux appareils électroménagers (8) d'effectuer les cycles de fonctionnement respectifs en utilisant uniquement l'excédent de puissance électrique, les appareils électroménagers (8) continuent à fonctionner de manière à terminer les cycles de fonctionnement respectifs dans les délais programmés, même en absorbant la puissance électrique nécessaire provenant du réseau électrique public (3).

6. Système de commande électronique (1) selon la revendication 5, dans lequel les premier et deuxième modes de fonctionnement automatique sont en outre conçus pour faire en sorte que, si l'excédent de puissance électrique produite par le système photovoltaïque domestique (2) par rapport à la consommation électrique du système électrique domestique (4) diminue pendant l'exécution des cycles de fonctionnement des appareils électroménagers (8) dans une mesure telle qu'il devient insuffisant pour permettre l'achèvement des cycles de fonctionnement, les cycles de fonctionnement soient achevés en absorbant la puissance électrique requise provenant du réseau électrique public (3).

7. Système de commande électronique (1) selon l'une quelconque des revendications précédentes, dans lequel les appareils électroménagers (8) exposent une connectivité Wi-Fi pour communiquer avec l'unité de commande électronique (14) via un réseau local sans fil (12).

8. Logiciel pouvant être chargé dans l'unité de commande électronique (14) du système de commande électronique (1) selon l'une quelconque des revendications précédentes, et conçu pour faire en sorte que, lorsqu'il est exécuté, l'unité de commande électronique (14) soit programmée comme revendiqué dans l'une quelconque des revendications précédentes.
